# EUROPEAN PATENT APPLICATION

(11) **EP 1 779 949 A1**
(43) Date of publication of application: **02.05.2007**
(21) Application number: 05023802.1
(22) Date of filing: 01.11.2005
(51) Int. Cl.: B23B 49/00, B23Q 17/09

(54) **A system and a method for detecting tool fracture in machine tools**

(71) Applicant: VOLVO LASTVAGNAR AB, 405 08 Göteborg (SE)
(72) Inventor: Larsson, Marcus, 54334 Tibrol (SE); Göransson, Marcus, 52135 Falköping (SE)
(74) Representative: Fröhling, Werner Otto

(57) **Abstract**

A system and a method for controlling tools (18a, 18b, 23a, 23b) for machining workpieces, comprising a holding fixture (21) with a sensor (20) which is connected to a control unit for detecting tool fracture. The sensor (20) is positioned by the holding fixture (21) so that it is aligned towards an end surface of the machine tool (18a, 18b, 23a, 23b). The sensor is arranged for utilizing reflected acoustic signals for sensing the end surface of the machine tool.

## Description

### TECHNICAL FIELD

The present invention relates to a system for controlling tools for machining workpieces, comprising a holding fixture with a sensor which is connected to a control unit for detecting tool fracture. Furthermore, the invention relates to a method for controlling tools for machining workpieces.

### BACKGROUND OF THE INVENTION

In large scale manufacturing plants using automatic machines for production, it is important to keep the machines running to produce high quality goods. It is also important for the productive economy to reduce the cycle times in the process. Thus, a single fractured machine tool may disrupt the production process in a plant and cause severe economic loss.

In the case of engine manufacturing, the engine blocks pass through a series of multi-operation machines working in different operations on different sides and ends of each block. Multi-head drill machines are used for drilling, reaming and thread tapping with different tool boxes. These machines can be equipped with six boxes on a rotating table. For example, when drilling the cylinder head bolt holes in the block of a six-cylinder engine, a drill box equipped with 38 drills make all head bolt holes in a single drill operation. In the next two following operation cycles, these holes are reamed and subsequently thread tapped, by 38 reaming tools and 38 thread tapping tools, respectively. Thus, a total of 114 different machine tools have been used, only in the making of the cylinder head bolt holes of the engine block. A fracture in any one of all these machine tools would interrupt the manufacturing process.

If a piece of a fractured machine tool is left inside a hole until the following work operations, other tools entering the same hole will also be damaged. Thus, it is important to be able to stop the work operation in a controlled manner, so that a non-functional machine tool can be replaced, before more damage is made.

Several different methods have been used for controlling work tools and for detecting non-functional tools. For example, a control unit comprising a set of rods corresponding to the tools may be made to travel towards the work piece into the holes to detect if a piece of a fractured machine tool is left inside any of the holes. The control box uses one of the available positions on the rotating table and the control method adds an extra cycle to the manufacturing process and is therefore time consuming.

Vision systems compare different digital images of an object to detect a difference. This method is not optimal for the example described above, since vision conditions are not good inside a multi-head drill machine, where cutting fluid and metal cuttings may obstruct the view to the tools.

Thus, better systems and methods for controlling tools in a difficult environment are needed, at least for reducing the cycle times.

### SUMMARY OF THE INVENTION

A system according to the invention for controlling tools for machining workpieces comprises a holding fixture with a sensor which is connected to a control unit for detecting tool fracture and is characterized in that the sensor is positioned by the holding fixture so that it is aligned towards an end surface of the machine tool, and that the sensor is arranged for utilizing reflected acoustic signals for sensing the end surface of the machine tool. It has been found that acoustic signals are able to detect in the presence of cutting fluid and metal cuttings.

A method according to the invention for controlling tools for machining workpieces is characterized by the steps of aligning the sensor towards an end surface of the machine tool, and generating acoustic signals for sensing acoustic reflections from the end surface of the machine tool.

### BRIEF DESCRIPTION OF THE DRAWINGS

The invention will be further described in the following, in a non-limiting way with reference to the accompanying drawings in which:
- Fig. 1: diagrammatically shows a multi-head drill machine, and
- Fig. 2: shows the control system according to the invention adapted for controlling drill tools, and
- Fig. 3: is a partly broken view showing the control system according to the invention adapted for controlling thread tapping tools.

### DETAILED DESCRIPTION OF THE INVENTION

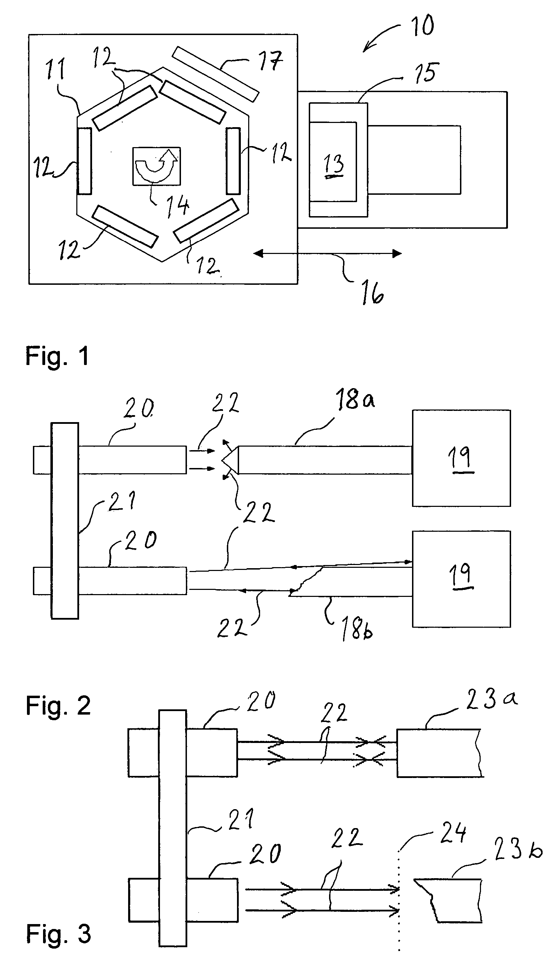

The invention is described in Fig. 1, as an example only, in conjunction with a multi-head drill machine 10, comprising a rotating table 11 equipped with six tool boxes 12. Each tool box comprises a set of machine tools for example for drilling, reaming or thread tapping at different points on a workpiece 13 in a single operation. The table 11 is arranged to rotate in the direction of the arrow 14, to different indexing positions where the respective tool box faces a fixture 15 for the workpiece 13. By sliding the fixture longitudinally to or from the facing tool box (see arrow 16), the machine tools in the tool box are able to perform their respective operations on the workpiece.

A control apparatus 17 is located beside the rotating table 11 in the next indexing position after a tool box 12 has performed its work operation. The control apparatus 17 comprises a set of sensors and a control unit for evaluating the sensor signals registered in a control operation. Thus, the positioning of the control apparatus 17 beside the rotating table 11 enables the use of one more tool box 12, in comparison with the traditional method of using a control box on the rotating table for detecting the result of an operation on the workpiece.

Control of two drill tools is illustrated in Fig. 2, where the respective drill 18a, 18b is mounted in the usual manner in a rotator head 19, which is carried by the tool box (not shown in the drawing). The upper drill 18a in Fig. 2 is intact, but the lower drill 18b has been damaged in a previous work operation. Two ultrasonic sensors 20 are aligned by means of a holding fixture 21 so that they are aligned towards the end of the respective drill 18a, 18b.

The arrows 22 illustrate the ultrasonic signals emitted by the sensors and the reflections from the drills. In case of the intact drill 18a, the ultrasound reflections are reflected away from the angled drill surfaces so that there is no signal response received by the sensor 20. In case of the damaged drill 18b, ultrasound reflections can be received by the sensor 20 either from the fractured end surfaces of the drill or from the flat end surface of the rotator head 19, this having been confirmed by numerous tests.

Control of two thread tapping tools is illustrated in Fig. 3, where the respective tap 23a, 23b is mounted as described above in a rotator head (not shown in the drawing), which is carried by the tool box (also not shown in the drawing). The upper tap 23a in Fig. 3 is intact, but the lower tap 23b has been damaged in a previous work operation. Two ultrasonic sensors 20 are aligned by means of a holding fixture 21 so that they are aligned towards the end of the respective tap 23a, 23b.

The arrows 22 illustrate the ultrasonic signals emitted by the sensors and the reflections from the taps. In case of the intact tap 23a, the ultrasound reflections are reflected from the flat tap surface so that a signal response is received by the sensor 20. In case of the damaged tap 23b, no ultrasound reflections are received by the sensor 20 from the fractured end surfaces of the tap, as the control unit has been programmed to set a predefined maximum limit distance for detection, illustrated by the dotted line 24, and the fractured end surface is located beyond that limit distance.

Thus, in the case when the control apparatus is used in an application where there are different kinds of tools, the control unit must be programmed to distinguish between the tool types, so that the logic for when a detected ultrasonic refection indicates a functional tool or a non-functional tool can be reversed, as described by the two examples above.

It is possible to provide the holding fixture 21 with means for focusing the acoustic waves transmitted and received by the sensor 20. For example, a length of a tube may be used for this purpose.

The invention is not limited to the above-described embodiments, but several modifications are possible within the scope of the following claims. For example the system and method according to the invention may be applied to other types of machines than the above described example with the multi-head drill machine 10. It is then possible to arrange the control unit movable, so that it is moved to and from a position in front of a fixed tool holder to control the tool/tools after a performed work operation. The invention is not limited to the use of ultrasonic acoustic sensors for detection. Instead, other acoustic sensors may be used that operate in wavelengths not normally found in the environment of the sensors.

## Claims

1. A system for controlling tools (18a, 18b, 23a, 23b) for machining workpieces, comprising a holding fixture (21) with a sensor (23) which is connected to a control unit for detecting tool fracture,
**characterized in**
**that** the sensor (20) is positioned by the holding fixture (21) so that it is aligned towards an end surface of the machine tool (18a, 18b, 23a, 23b), and that the sensor is arranged for utilizing reflected acoustic signals for sensing the end surface of the machine tool.

2. A system according to claim 1,
**characterized in**
**that** the acoustic signals are ultrasonic.

3. A system according to claim 2,
**characterized in**
**that** the holding fixture (21) is provided with means for focusing acoustic waves in the directions away from or towards the sensor (20).

4. A system according to any one of claims 1-3,
**characterized in**
**that** the holding fixture (21) is provided with a number of sensors (20) for control of a corresponding number of machine tools (18a, 18b, 23a, 23b).

5. A system according to any one of claims 1 - 4,
**characterized in**
**that** the holding fixture (21) is located adjacent the working range for a multi head drill machine (10).

6. A system according to claim 5,
**characterized in that** the multi head drill machine (10) is adapted for drilling, thread cutting or reaming.

7. A method for controlling tools (18a, 18b, 23a, 23b) for machining workpieces,
**characterized in** the steps of,
aligning the sensor (20) towards an end surface of the machine tool (18a, 18b, 23a, 23b), and generating acoustic signals for sensing acoustic reflections from the end surface of the machine tool.

8. A method according to claim 7,
**characterized in** the step of using reflecting acoustic signals from the end surface of a thread cutting tool (23a, 23b) to indicate a functional tool.

9. A method according to claim 7,
**characterized in** the step of programming a control unit for the sensor (20) to set a predefined maximum limit distance for detection.

10. A method according to claim 7,
**characterized in** the step of using reflecting acoustic signals from the end surface of a drill tool (18a, 18b) to indicate a non-functional tool.

11. A method according to any one of claims 7 - 10,
**characterized in that** the acoustic signals are generated in ultrasonic wavelengths.
